# EUROPEAN PATENT APPLICATION

(11) **EP 1 486 760 A1**
(43) Date of publication of application: **15.12.2004**
(21) Application number: 03013299.7
(22) Date of filing: 13.06.2003
(51) Int. Cl.: G01C 21/26, G01C 21/36, H01Q 1/32

(54) **An integrated telephone and telematics device**

(71) Applicant: Ford Global Technologies, LLC, Dearborn, MICHIGAN 48126-2490 (US)
(72) Inventor: Fast, Peder, 429 34 Kullavik (SE)
(74) Representative: Hammond, Andrew David

(57) **Abstract**

The present patent application relates to an integrated vehicle telematic system (1). The system comprises wireless communications means (3) and means (4) for receiving data from a positioning system to derive positional information. The telematic system (1) further comprise integrated antenna means (5, 6) for said wireless communications means (3) and said means (4) for receiving data from a positioning system. The telematic system (1) is further adapted to be arranged at a location within said vehicle (2) providing for good antenna properties.

## Description

### Technical field

The present patent application relates to an integrated telephone and telematics device and in particular an integrated telephone and telematics device in automotive vehicles providing for reduced system complexity and cost in accordance with the preamble of claim 1.

### Background of the invention

Integrated telephones are common in many car models. The integrated phone is also a prerequisite for telematic applications such as crash notification, emergency call, remote vehicle functions and navigation.

These systems today typically use a phone module with cables to an external phone antenna and to an external GPS antenna. It is also common to use in conjunction with these systems a backup microphone, a backup loudspeaker and a backup battery, if the primary systems are out of operations e.g. as a result of a crash.

One such device is previously known through US 6 282 491, in which is described a telematic device in which a car radio with an RDS module, a wireless telephone, and a positioning and navigation system are provided in one housing. The housing is designed so that it can be installed in a standard bay in the instrument panel of a motor vehicle. The telematic device can be used to receive general information via the car radio as well as specific information via the GSM module. In addition, data relating to, for example, the vehicle position, a desired destination, or an emergency call can be sent to the central station. The central station calculates one or more routes and transmits them back to the telematic device. In the event of an accident or a vehicle breakdown, an emergency call is transmitted and assistance obtained. Additional telematic services provided include an expanded anti-theft system for the motor vehicle, hotel reservations, etc.

A disadvantage with the arrangement known from the prior art mentioned above is that it relies on the wired connection of external antennas, which cables and antennas are vulnerable in crashes and therefore likely need to be complemented with backup antennas. These cables and antennas are costly and the use of the device is likely to be complicated, as it will be difficult to determine whether an external antenna is damaged. The difficulty to determine whether to use an external antenna or a backup antenna may also cause a delay, which could be critical, e.g. in a crash situation. Use of an external antenna in combination with a backup antenna will also require use of an antenna switch in order to select which antenna to be used. The antenna switch, cables and interconnects attenuates the antenna signal and both material costs and installation costs adds to the total cost.

### Summary of the invention

One object of the invention is to provide an improved integrated telephone and telematics device and in particular an improved integrated telephone and telematics device in automotive vehicles providing high crashworthiness at low cost, while addressing the problems described in relation to the prior art device.

This object is achieved in accordance with the characterizing portion of claim 1.

Thanks to the provision of integrated antenna means for a wireless communications means and a means for receiving data from a positioning system and that the telematic system further is adapted to be arranged at a location within said vehicle providing for good antenna properties the need for cables and external antennas, backup antennas and associated antenna switches which are vulnerable in crashes and adds to the complexity and cost of telematic systems are eliminated.

Preferred embodiments are listed in the dependent claims.

### Description of drawings

In the following, the invention will be described in greater detail with reference to attached drawings, in which:

Fig. 1 shows a simplified side view of a vehicle comprising an integrated vehicle telematic system arranged in accordance with one embodiment of the present invention.

Fig. 2 is a simplified side view of a vehicle comprising an integrated vehicle telematic system arranged in accordance with another embodiment of the present invention.

Fig. 3 is a simplified block schematic of the integrated vehicle telematic system in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

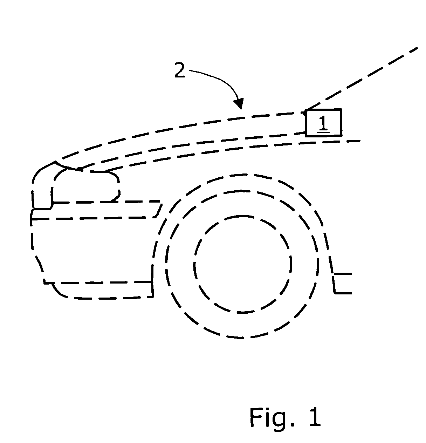

A simplified side view of a vehicle 2 comprising an integrated vehicle telematic system 1 according to one embodiment of the present invention is shown in figure 1. The positioning of the system 1 is in the lower part of the windscreen of the vehicle 2, where the system can be mounted visible or invisible for reasons which will become evident from the following description.

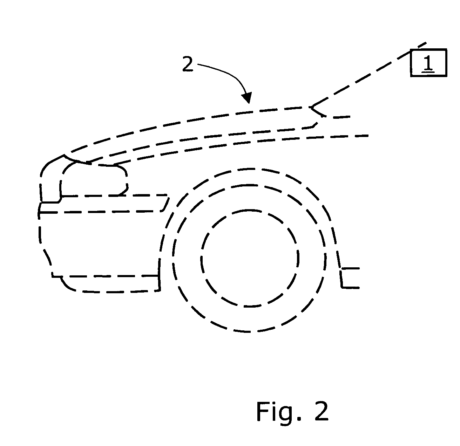

According to a second embodiment a simplified side view of a vehicle 2 comprising an integrated vehicle telematic system 1 n is shown in figure 2. The positioning of the system 1 is behind an internal rear view mirror (not shown) arranged in the area of the windscreen of the vehicle 2, where the system can arranged for reasons which will become evident from the following description.

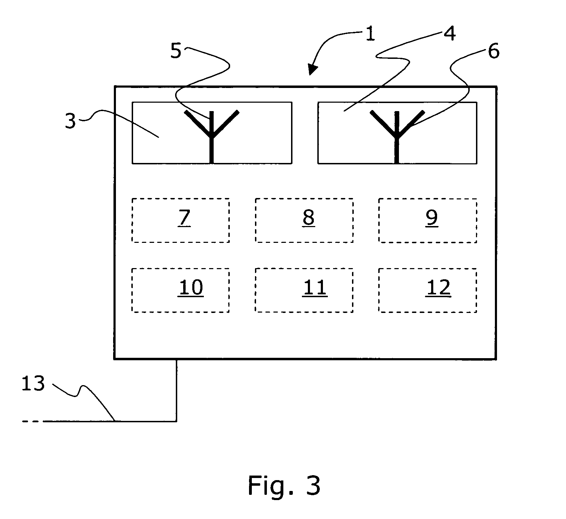

As is shown by the simplified block schematic of figure 3 the integrated vehicle telematic system 1 comprises wireless communications means 3, such as a cellular phone or satellite radio or any other means for wireless communication which can be used to transmit information to e.g. a public telephone network or similar, and means 4 for receiving data from a positioning system to derive positional information. These means 4 for receiving data from a positioning system can e.g. comprise means for receiving code sequences from global positioning system (GPS) satellites to derive said positional information or alternatively rely on positioning systems integrated in the cellular telephony network or similar systems enabling correct positioning of said vehicle 2. The telematic system 1 further comprise integrated antenna means 5, 6 for said wireless communications means 3 and said means 4 for receiving data from a positioning system. Further, the telematic system 1 is adapted to be arranged at a location within said vehicle 2 providing for good antenna properties.

In accordance with the above the telematic system 1 is preferably adapted to be arranged at a location within said vehicle 2 having good permeability for electromagnetic radiation, such as adjacent to a window of said vehicle 2, e.g. the windscreen of said vehicle 2.

The system 1 can, as shown in figure 1, suitably be adapted to be arranged at a location adjacent to the lower part of the windscreen of said vehicle 2. Alternatively the system 1 can be adapted to be arranged at a location adjacent to an internal rear view mirror of said vehicle 2.

The system 1 is integrated into one unit. In addition to the above described components the system can be provided with a backup microphone 7, a backup speaker 8, a backup battery 9, an echo cancellation module 10 and a noise reduction module 11.

A further embodiment may also comprise a low-power wireless communications module 12, such as a Bluetooth module, enabling e.g. improved voice communications quality via a hands free device (not shown), possibly via an infotainment system of the vehicle 2.

The positions according to figure 1 and figure 2 are chosen to provide acceptable antenna performance, but these positions are also suitable to enable the backup microphone 7 and the backup speaker 8, if present, to function properly in providing audible sound and in picking up voice communication from the occupants of the vehicle 2.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An integrated vehicle telematic system (1) comprising wireless communications means (3) and means (4) for receiving data from a positioning system to derive positional information, **characterized in that** said telematic system (1) further comprise integrated antenna means (5, 6) for said wireless communications means (3) and said means (4) for receiving data from a positioning system and **in that** said telematic system (1) further is adapted to be arranged at a location within said vehicle (2) providing for good antenna properties.

2. A system (1) according to claim 1,
**characterized in that** said telematic system (1) further is adapted to be arranged at a location within said vehicle (2) having good permeability for electromagnetic radiation.

3. A system (1) according to claim 1 or claim 2,
**characterized in that** said telematic system (1) further is adapted to be arranged at a location within said vehicle (2) adjacent to a window

4. A system (1) according to claim 3,
**characterized in** said window being the windscreen of said vehicle (2).

5. A system (1) according claim 4,
**characterized in that** said telematic system (1) further is adapted to be arranged at a location adjacent to the lower part of said windscreen.

6. A system (1) according to claim 4,
**characterized in that** said telematic system (1) further is adapted to be arranged at a location adjacent to an internal rear view mirror of said vehicle (2).

7. A system (1) according to any one of the preceding claims,
**characterized in that** the means (4) for receiving data from a positioning system comprise means for receiving code sequences from global positioning system (GPS) satellites to derive said positional information.

8. An automotive vehicle,
**characterized in that** it comprises a system (1) according to any one of the preceding claims.
